# EUROPÄISCHE PATENTSCHRIFT

(11) **EP 1 837 443 B1**
(45) Veröffentlichungstag und Bekanntmachung des Hinweises auf die Patenterteilung: **11.02.2009**
(21) Anmeldenummer: 06450171.1
(22) Anmeldetag: 20.11.2006
(51) Int. Cl.: E01F 8/00, F24J 2/52, H01L 31/042

(54) **Vorrichtung zur Anordnung von photovoltaischen Kollektoren an einer Wand, insbesondere an einer Schallschutzwand**
Device for the arrangement of photovoltaic cells on a wall, in particular on an antinoise wall.
Dispositif d'installation de cellules photovoltaïques sur un mur, en particulier sur un mur anti-bruit

(30) Priorität: 20.03.2006 AT 4622006
(43) Veröffentlichungstag der Anmeldung: 26.09.2007
(73) Patentinhaber: Sedelmayer, Rainer, 1100 Wien (AT); Sedelmayer, Roland, 1100 Wien (AT)
(72) Erfinder: Sedelmayer, Rainer, 1100 Wien (AT); Sedelmayer, Roland, 1100 Wien (AT)
(74) Vertreter: Atzwanger, Richard

(56) Entgegenhaltungen:
- JP-A- 8 120 625
- US-B1- 6 212 829

## Beschreibung

Die gegenständliche Erfindung betrifft einen photovoltaischen Kollektor zur Befestigung an einer Wand od.dgl., insbesondere an einer Schallschutzwand, bestehend aus einem an der Wand od.dgl. befestigbaren Träger mit photovoltaischen Elementen, mit elektrischen Amaturen und mit Leitungen, wobei der Träger durch eine im Querschnitt mehrfach abgewinkelte Leiste gebildet ist, welche einen ersten Schenkel aufweist, welcher auf die obere Stirnfläche der Wand od.dgl. aufliegt, weiters einen zweiten Schenkel aufweist, welcher in seiner Betriebslage gegenüber dem auf die obere Stirnfläche der Wand od.dgl. aufliegenden Schenkel schräg nach unten abragt und auf welchem sich die photovoltaischen Elemente befinden, sowie weiters einen dritten Schenkel aufweist, welcher an die Seitenfläche der Wand od.dgl. anliegt, wobei der erste Schenkel angenähert horizontal ausgerichtet ist und der zweite Schenkel in der Betriebslage des Trägers vom ersten Schenkel schräg nach unten abragt

Es ist bekannt, photovoltaische Kollektoren auf Dachflächen, an Fassaden und an anderen Teilen von Bauwerken anzuordnen. Es ist weiters bekannt, für die Befestigung von photovoltaischen Kollektoren eigene Tragkonstruktionen vorzusehen, welche z.B. längs Autobahnen errichtet werden.

Der gegenständlichen Erfindung liegt der Vorschlag zugrunde, Schallschutzwände, welche sich längs Autobahnen oder längs Eisenbahntrassen befinden, als Tragkonstruktionen für photovoltaische Kollektoren zu verwenden. Hierbei ist jedoch zu berücksichtigen, dass Schallschutzwände in der Regel vertikal ausgerichtet sind, wogegen photovoltaische Kollektoren gegenüber der Vertikalen in einem Winkel von etwa 60° angeordnet werden müssen, um einen optimalen Wirkungsgrad zu gewährleisten. Weiters muss berücksichtigt werden, dass Montagearbeiten an Schallschutzwänden, welche sich längs Autobahnen bzw. längs Eisenbahntrassen befinden, aufgrund des ununterbrochenen Verkehrs nur unter erschwerten Bedingungen möglich sind.

Aus der JP 08120625A ist ein photovoltaischer Kollektor mit der eingangs beschriebenen Ausbildung bekannt. Der gegenständlichen Erfindung liegt die Aufgabe zugrunde, einen photovoltaischen Kollektor zu schaffen, welcher gegenüber diesem bekannten photovoltaischen Kollektor eine wesentlich erleichterte Montage sowie eine bessere Stabilität gewährleistet. Dies wird erfindungsgemäß durch die Merkmale des Anspruchs 1 erzielt.

Vorzugsweise schließt der erste Schenkel mit dem zweiten Schenkel einen Winkel von 120° bis 160°, insbesondere von etwa 150°, ein. Weiters ist vorzugsweise der erste Schenkel mit mindestens einer Ausnehmung ausgebildet ist, welche in der Betriebslage des Trägers von Befestigungsbolzen durchsetzt ist.

Nach weiteren bevorzugten Merkmalen ist der zweite Schenkel mit mindestens einer Ausnehmung ausgebildet, welche der Hindurchführung von mindestens einer Leitung dient und ist an der Rückseite des zweiten Schenkels ein Gehäuse für elektrische Armaturen vorgesehen. Weiters ist vorzugsweise der vierte Schenkel mit mindestens einer Ausnehmung ausgebildet, welche als Wasserablauf dient und sind in der Betriebslage des Trägers zwischen dem ersten Schenkel, dem dritten Schenkel sowie dem fünften Schenkel und den Oberflächen der Wand jeweils Zwischenlagen aus Schaumstoff od.dgl. vorgesehen.

Weiters sind vorzugsweise den an einer Wand nebeneinander angeordneten Trägern diese verbindende Zwischenelemente zugeordnet, welche im Querschnitt angenähert dreieckig ausgebildet sind und welche in den durch den zweiten, dritten und vierten Schenkel des Trägers gebildeten Kanal einschiebbar sind. Weiters kann dem Träger ein Befestigungselement zugeordnet sein, welches dazu dient, diesen auf einem an der Wand befindlichen Tragbolzen zu befestigen, wobei dieses Befestigungselement aus einem mehrteiligen Klemmkörper und aus einem mit einem Kopf und einem Schraubgewinde versehenen Bolzen besteht, wobei der Bolzen mittels des Klemmkörpers am Tragbolzen befestigbar ist. Dabei kann dem Klemmkörper ein Spannring zugeordnet sein, durch welchen er in seiner Schließlage gehalten ist.

Der Gegenstand der Erfindung ist nachstehend anhand eines in der Zeichnung dargestellten Ausführungsbeispieles näher erläutert. Es zeigen:
- Fig.1: eine Schallschutzwand, auf welcher ein erfindungsgemäßer photo- voltaischer Kollektor befestigt ist, in axonometrischer Darstellung;
- Fig.1a: die Schallschutzwand und einen erfindungsgemäßen photovol- taischen Kollektor, in Seitenansicht;
- Fig.2: ein Bauelement zur Errichtung einer Schallschutzwand, in Vorder- ansicht;
- Fig.2a, Fig.2b: zwei Ausführungsformen des Details A des Bauelementes gemäß Fig.2, in gegenüber Fig.2 vergrößerten. Darstellungen;
- Fig.3: einen erfindungsgemäßen photovoltaischen Kollektor, in axonome- trischer Darstellung und in gegenüber Fig.1 vergrößertem Maßstab;
- Fig.3a: eine den Kollektor gemäß Fig.3 ergänzende Einrichtung, in axono- metrischer Darstellung;
- Fig.4: eine Einrichtung zur Befestigung eines erfindungsgemäßen photovol- taischen Kollektors an einem Tragbolzen einer Schallschutzwand, im Schnitt; und
- Fig. 4a: ein Detail der Einrichtung gemäß Fig. 4, in axonometrischer Darstel- lung.

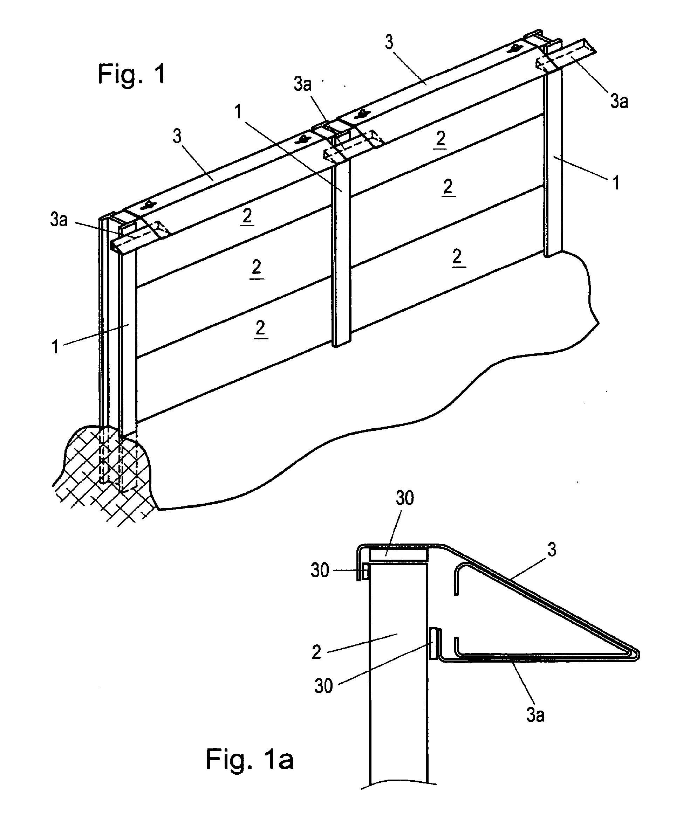

Die in Fig.1 dargestellten zwei Abschnitte einer Schallschutzwand bestehen aus im Boden verankerten, vertikal ausgerichteten I-profilierten Pfosten 1, in deren einander zugewandte Ausnehmungen von oben her plattenförmige Schallschutzelemente 2 eingesetzt sind. Auf die obere Stirnfläche dieser Schallschutzwand sind Träger 3 für photovoltaische Elemente aufgesetzt und an den obersten Schallschutzelementen 2 lösbar befestigt. Dabei ist jedem Abschnitt der Schallschutzwand jeweils ein einstückiger Träger 3 für photovoltaische Elemente zugeordnet, wobei die einzelnen Träger 3 im Bereich der Pfosten 1 durch Zwischenelemente 3a miteinander verbunden sind.

Aus Fig.1a sind gleichfalls die Schallschutzelemente 2, die Träger 3 und die Zwischenelemente 3a ersichtlich. Weiters ist daraus ersichtlich, dass zwischen den Trägern 3 und den Schallschutzelementen 2 jeweils Zwischenlagen 30 vorgesehen sind.

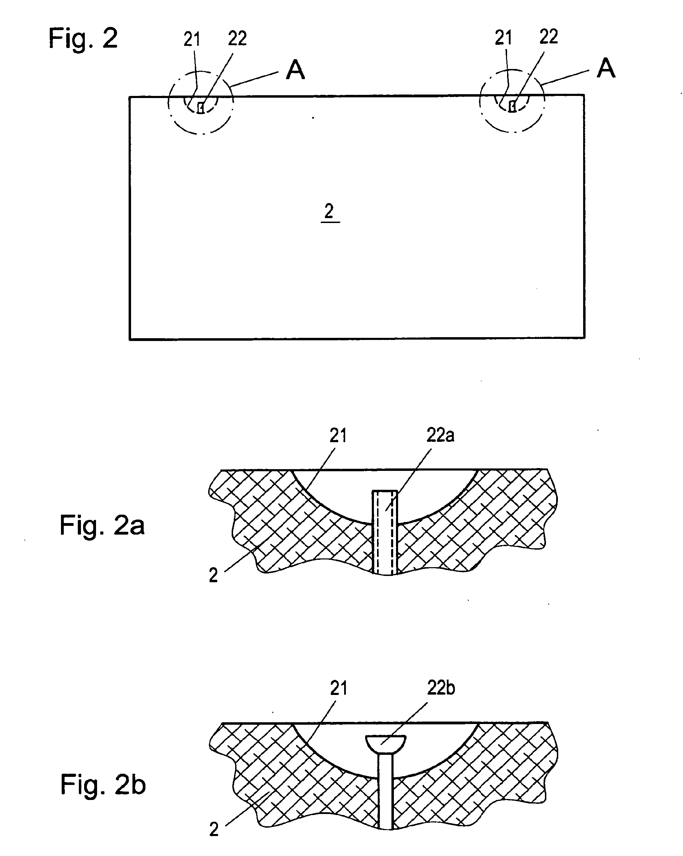

Wie dies aus Fig.2 ersichtlich ist, sind die Schallschutzelemente 2 an ihrer oberen Stirnfläche mit Ausnehmungen 21 ausgebildet, in welchen sich versenkt angeordnete Tragbolzen 22 befinden.

Wie dies aus den Fig. 2a und 2b ersichtlich ist, können die Tragbolzen als Schraubbolzen 22a oder als Kugelkopfbolzen 22b ausgebildet sein.

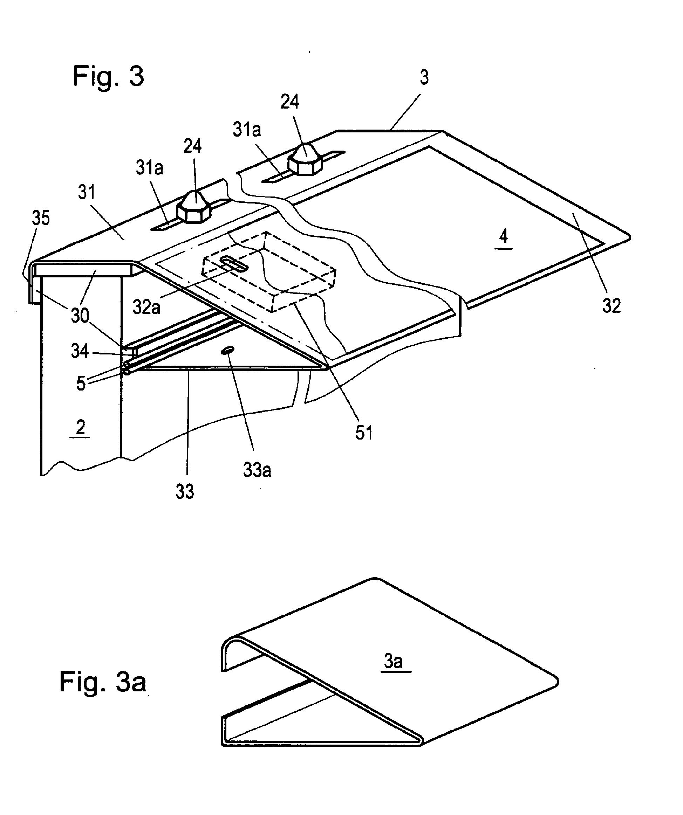

Wie dies aus Fig.3 ersichtlich ist, besteht ein erfindungsgemäßer Träger 3 für photovoltaische Elemente aus einer im Querschnitt mehrfach abgewinkelten Leiste, welche z.B. aus einem verzinkten oder mit Kunststoff beschichteten Blech hergestellt ist. Vorzugsweise besteht der Träger 3 aus Aluminium.

Dieser Träger 3 weist einen ersten Schenkel 31 auf, welcher auf die obere Stirnfläche der Schallschutzwand zur Auflage gebracht wird und dabei angenähert horizontal ausgerichtet ist. Vom ersten Schenkel 31 ragt ein zweiter Schenkel 32 ab, welcher zur Vertikalen um etwa 60° geneigt ist, und auf welchem sich eine mit photovoltaischen Elementen ausgebildete Folie 4 befindet. Weiters ist ein dritter Schenkel 34 vorgesehen, welcher angenähert vertikal nach oben gerichtet ist, welcher an die zugeordnete vertikale Oberfläche eines der Schallschutzelemente 2 anliegt und welcher über einen angenähert horizontal ausgerichteten vierten Schenkel 33 mit dem zweiten Schenkel 32 verbunden ist. Durch den vierten Schenkel 33, an welchen der an ein Schallschutzelement 2 anliegende dritte Schenkel 34 anschließt, wird der zweite Schenkel 32, auf welchem sich die Folie 4 mit den photovoltaischen Elementen befindt, abgestützt, wodurch der Träger 3 leicht montierbar ist und in sehr stabiler Weise auf dem betreffenden Schallschutzelement 2 befestigt ist.

Durch den zweiten, dritten und vierten Schenkel 32, 34 und 33 ist weiters ein Kanal zur Aufnahme von Kabeln 5 zur Leitung des durch die photovoltaischen Elemente erzeugten Stromes gebildet.

An den ersten Schenkel 31 schließt weiters ein fünfter Schenkel 35 an, welcher vertikal ausgerichtet ist und welcher an die andere Oberfläche des betreffenden Schallschutzelementes 2 anliegt. Zwischen den Schenkeln 31, 34 und 35 und den Oberflächen der Schallschutzwand befinden sich aus einem Schaumstoff bestehende Zwischenlagen 30.

Zur Befestigung des Trägers 3 an der Oberseite eines der Schallschutzelemente 2 ist der erste Schenkel 31 mit Schlitzen 31a ausgebildet, welche von Befestigungsbolzen durchsetzt sind, auf welche jeweils eine Hutmutter 24 aufgesetzt ist.
Der zweite Schenkel 32 ist an einem seiner Enden mit einer Durchbrechung 32a ausgebildet, durch welche hindurch die von der in der Folie 4 befindlichen photovoltaischen Elemente abgehende Leitung zu einem an der Rückseite dieses Schenkels 32 befindlichen Gehäuse 51 mit elektrischen Armaturen geführt ist. Der vierte Schenkel 33 ist mit Öffnungen 33a ausgebildet, welche als Wasserablauf dienen.

Um durch die einzelnen Träger 3, welche jeweils einem Abschnitt der Schallschutzwand zugeordnet sind, einen durchgehenden Kanal für die sich längs der Schallschutzwand erstreckenden Kabel 5 zu schaffen, ist weiters zwischen jeweils zwei Trägern 3 das in Fig.3a dargestellte Verbindungselement 3a vorgesehen, welches einen dem durch die Schenkel 31, 32 und 33 gebildeten Querschnitt angenähert gleichem Querschnitt aufweist und welches in die einander zugewandten Enden der Kabelkanäle zweier nebeneinander befindlicher Träger 3 einsetzbar ist.

Sofern die an den Schallschutzelementen 2 vorgesehenen Tragbolzen 22 als Schraubbolzen ausgebildet sind, werden diese durch eine Gewindehülse verlängert, welche den zugeordneten Schlitz 31a des Trägers 3 durchsetzt und auf welche eine Hutmutter 24 aufgeschraubt wird. Hierdurch wird der Träger 3 an der oberen Stirnfläche der Schallschutzwand befestigt.

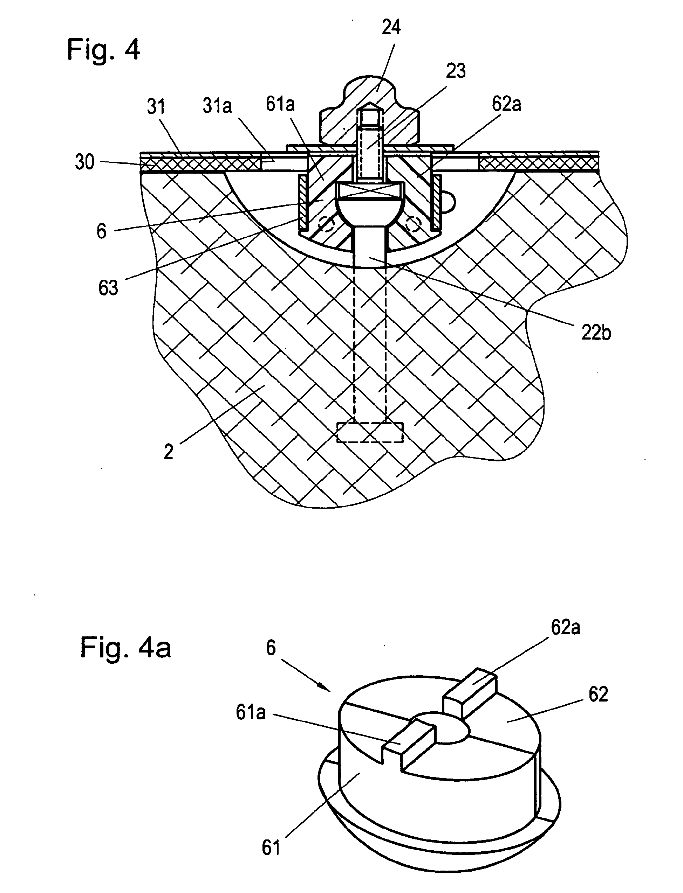

Soferne demgegenüber die an den Schallschutzelementen 2 vorgesehenen Tragbolzen als Kugelkopfbolzen 22b ausgebildet sind, ist zur Befestigung der Träger 3 ein aus den Fig.4 und 4a ersichtlicher Klemmkörper 6 vorgesehen, welcher durch zwei Teile 61 und 62 gebildet ist und welcher dazu dient, am Kugelkopfbolzen 22b einen Schraubbolzen 23 zu befestigen. Die Verbindung der beiden Teile 61 und 62 erfolgt durch einen Spannring 63, welcher über die beiden Teile 61 und 62 geschoben wird. Zur Verdrehsicherung sind die beiden Teile 61 und 62 mit nach oben abragenden Leisten 61 a und 62a ausgebildet, welche in den zugeordneten Schlitz 31a des Träges 3 einragen. Auf den Schraubbolzen 23 ist gleichfalls eine Hutmutter 24 aufschraubbar.

Somit ist ein photovoltaischer Kollektor geschaffen, welcher mit sehr geringem Montageaufwand auf der oberen Stirnfläche von Schallschutzwänden befestigbar ist und welcher eine große Stabilität aufweist, wodurch längs Autobahnen und Eisenbahntrassen befindliche Schallschutzwände in einfacher Weise als Tragkonstruktionen für photovoltaische Elemente verwendet werden können.

## Patentansprüche

1. Photovoltaischer Kollektor zur Befestigung an einer Wand (1, 2) od.dgl., insbesondere an einer Schallschutzwand, bestehend aus einem an der Wand (1, 2) od.dgl. befestigbaren Träger (3) mit photovoltaischen Elementen, mit elektrischen Armaturen und init Leitungen (5),wobei der Träger (3) durch eine im Querschnitt mehrfach abgewinkelte Leiste gebildet ist, welche einen ersten Schenkel (31) aufweist, welcher auf die obere Stirnfläche der Wand (1, 2) od.dgl. aufliegt, weiters einen zweiten Schenkel (32) aufweist, welcher in seiner Betriebslage gegenüber dem auf die obere Stirnfläche der Wand (1,2) od.dgl. aufliegenden Schenkel (31) schräg nach unten abragt und auf welchem sich die photovoltaischen Elemente befinden, sowie weiters einen dritten Schenkel (34) aufweist, welcher an die Seitenfläche der Wand (1, 2) od.dgl. anliegt, wobei der erste Schenkel (31) angenähert horizontal ausgerichtet ist und der zweite Schenkel (32) in der Betriebslage des Trägers (3) vom ersten Schenkel (31) schräg nach unten abragt, wobei an den dritten Schenkel (34), welcher zumindest angenähert vertikal nach oben ausgerichtet ist, ein vierter Schenkel (33) anschließt, welcher sich zwischen dem zweiten Schenkel (32) und dem dritten Schenkel (34) befindet und welcher zumindest angenähert horizontal ausgerichtet ist, wobei der zweite Schenkel (32) durch den dritten Schenkel (34) sowie den vierten Schenkel (33) gegenüber der Oberfläche der Wand (1,2) od.dgl. abgestützt ist, und dass weiters der erste Schenkel (31) an seinem dem zweiten Schenkel (32) gegenüber liegenden Rand mit einem fünften Schenkel (35) ausgebildet ist, welcher in der Betriebslage des Trägers (3) angenähert vertikal nach unten ausgerichtet ist und welcher an die zugeordnete andere vertikale Oberfläche der Wand (1, 2) zur Anlage bringbar ist.

2. Photovoltaischer Kollektor nach Patentanspruch 1, **dadurch gekennzeichnet, dass** der erste Schenkel (31) mit dem zweiten Schenkel (32) einen Winkel von 120° bis 160°, insbesondere von etwa 150°, einschließt.

3. Photovoltaischer Kollektor nach einem der Patentansprüche 1 und 2, **dadurch gekennzeichnet, dass** der erste Schenkel (31) mit mindestens einer Ausnehmung (31 a) ausgebildet ist, welche in der Betriebslage des Trägers (3) von Befestigungsbolzen (23) durchsetzt ist.

4. Photovoltaischer Kollektor nach einem der Patentansprüche 1 bis 3, **dadurch gekennzeichnet, dass** der zweite Schenkel (32) mit mindestens einer Ausnehmung (32a) ausgebildet ist, welche der Hindurchführung von mindestens einer Leitung dient.

5. Photovoltaischer Kollektor nach einem der Patentansprüche 1 bis 4, **dadurch gekennzeichnet, dass** an der Rückseite des zweiten Schenkels (32) ein Gehäuse (51) für elektrische Armaturen vorgesehen ist.

6. Photovoltaischer Kollektor nach einem der Patentansprüche 1 bis 5, **dadurch gekennzeichnet, dass** der vierte Schenkel (33) mit mindestens einer Ausnehmung (33a) ausgebildet ist, welche als Wasserablauf dient.

7. Photovoltaischer Kollektor nach einem der Patentansprüche 1 bis 6, **dadurch gekennzeichnet, dass** in der Betriebslage des Trägers (3) zwischen dem ersten Schenkel (31), dem dritten Schenkel (34) sowie dem fünften Schenkel (35) und den Oberflächen der Wand jeweils Zwischenlagen (30) aus Schaumstoff od.dgl. vorgesehen sind.

8. Photovoltaischer Kollektor nach einem der Patentansprüche 1 bis 7, **dadurch gekennzeichnet, dass** den an einer Wand (1, 2) nebeneinander angeordneten Trägern (3) diese verbindende Zwischenelemente (3a) zugeordnet sind, welche im Querschnitt angenähert dreieckig ausgebildet sind und welche in den durch den zweiten, dritten und vierten Schenkel (32, 34, 33) des Trägers (3) gebildeten Kanal einschiebbar sind.

9. Photovoltaischer Kollektor nach einem der Patentansprüche 1 bis 8, **dadurch gekennzeichnet, dass** ihm ein Befestigungselement (6) zugeordnet ist, welches dazu dient, den Träger (3) auf einem an der Wand befindlichen Tragbolzen (22b) zu befestigen, wobei dieses Befestigungselement (6) aus einem mehrteiligen Klemmkörper (61, 62) und aus einem mit einem Kopf und einem Schraubgewinde versehenen Bolzen (23) besteht, wobei der Bolzen (23) mittels des Klemmkörpers (6) am Tragbolzen (22b) befestigbar ist.

10. Photovoltaischer Kollektor nach Patentanspruch 9, **dadurch gekennzeichnet, dass** dem Klemmkörper (6) ein Spannring (63) zugeordnet ist, durch welchen er in seiner Schließlage gehalten ist.

## Claims

1. A photovoltaic collector for attachment to a wall (1, 2) or the like, in particular to a noise barrier, consisting of a bracket (3), fastenable to the wall (1, 2) or the like, with photovoltaic elements, with electrical fittings and with conductors (5), the bracket (3) being formed by a cross-sectionally multiply bent strip which comprises a first leg (31), which rests on the upper end face of the wall (1, 2) or the like, further comprises a second leg (32), which in its operating position projects obliquely downwards relative to the leg (31) resting on the upper end face of the wall (1, 2) or the like and on which the photovoltaic elements are located, and further comprises a third leg (34), which adjoins the side face of the wall (1, 2) or the like, the first leg (31) being approximately horizontal in orientation and the second leg (32) projecting obliquely downwards from the first leg (31) in the operating position of the bracket (3), the third leg (34), which is oriented at least approximately vertically upwards, being adjoined by a fourth leg (33), which is located between the second leg (32) and the third leg (34) and which is oriented at least approximately horizontally, the second leg (32) being supported by the third leg (34) and the fourth leg (33) relative to the surface of the wall (1, 2) or the like, and additionally the first leg (31) being provided at its opposite edge from the second leg (32) with a fifth leg (35), which is oriented approximately vertically downwards in the operating position of the bracket (3) and which may be brought to rest against the associated other vertical surface of the wall (1, 2).

2. A photovoltaic collector according to claim 1, **characterised in that** the first leg (31) forms an angle of 120° to 160°, in particular of approximately 150°, with the second leg (32).

3. A photovoltaic collector according to either one of claims 1 and 2, **characterised in that** the first leg (31) is provided with at least one opening (31a), through which fastening bolts (23) pass in the operating position of the bracket (3).

4. A photovoltaic collector according to any one of claims 1 to 3, **characterised in that** the second leg (32) is provided with at least one opening (32a), which serves for passage of at least one conductor.

5. A photovoltaic collector according to any one of claims 1 to 4, **characterised in that** a housing (51) for electrical fittings is provided on the rear of the second leg (32).

6. A photovoltaic collector according to any one of claims 1 to 5, **characterised in that** the fourth leg (33) is provided with at least one opening (33a), which serves as a water outlet.

7. A photovoltaic collector according to any one of claims 1 to 6, **characterised in that**, in the operating position of the bracket (3), intermediate layers (30) of foam or the like are provided in each case between the first leg (31), the third leg (34) and the fifth leg (35) and the surfaces of the wall.

8. A photovoltaic collector according to any one of claims 1 to 7, **characterised in that** intermediate elements (3a) connecting the brackets (3) arranged next to one another on a wall (1, 2) are associated with said brackets (3), are approximately triangular in cross-section and are insertable into the channel formed by the second, third and fourth legs (32, 34, 33) of the bracket (3).

9. A photovoltaic collector according to any one of claims 1 to 8, **characterised in that** a fastening element (6) is associated therewith, which serves to fasten the bracket (3) on a supporting bolt (22b) located on the wall, this fastening element (6) consisting of a multipart clamping member (61, 62) and of a bolt (23) provided with a head and a screw thread, the bolt (23) being fastenable to the supporting bolt (22b) by means of the clamping member (6).

10. A photovoltaic collector according to claim 9, **characterised in that** the clamping member (6) has associated with it a clamping ring (63), by which it is held in its closed position.

## Revendications

1. Collecteur photovoltaïque à fixer à un mur (1, 2) ou à un élément similaire, en particulier à un mur antibruit, composé d'un support (3) qui est apte à être fixé au mur (1, 2) ou à l'élément similaire et qui comporte des éléments photovoltaïques, des armatures électriques et des conducteurs (5), le support (3) étant formé par une barre qui est coudée plusieurs fois, en section transversale, et qui présente une première branche (31) posée sur la surface frontale supérieure du mur (1, 2) ou de l'élément similaire, une deuxième branche (32) qui, en position de fonctionnement, dépasse en biais vers le bas par rapport à ladite branche (31) posée sur la surface frontale supérieure du mur (1, 2) ou de l'élément similaire, et sur laquelle se trouvent les éléments photovoltaïques, et une troisième branche (34) qui est appliquée contre la surface latérale du mur (1, 2) ou de l'élément similaire, la première branche (31) étant orientée approximativement à l'horizontale tandis que la deuxième branche (32), dans la position de fonctionnement du support (3), dépasse de la première branche (31) en biais vers le bas, étant précisé qu'il est prévu à la suite de la troisième branche (34), qui est orientée au moins approximativement à la verticale vers le haut, une quatrième branche (33) qui se trouve entre la deuxième branche (32) et la troisième branche (34) et qui est orientée au moins approximativement à l'horizontale, la deuxième branche (32) étant en appui par rapport à la surface du mur (1, 2) ou de l'élément similaire grâce à la troisième branche (34) et à la quatrième branche (33), et étant précisé que la première branche (31), sur son bord opposé à la deuxième branche (32), est également pourvue d'une cinquième branche (35) qui, dans la position de fonctionnement du support (3), est orientée approximativement à la verticale vers le bas et qui est apte à être amenée en butée contre l'autre surface verticale associée du mur (1, 2).

2. Collecteur photovoltaïque selon la revendication 1, **caractérisé en ce que** la première branche (31) forme avec la deuxième branche (32) un angle de 120° à 160°, en particulier d'environ 150°.

3. Collecteur photovoltaïque selon l'une des revendications 1 et 2, **caractérisé en ce que** la première branche (31) est pourvue d'au moins un creux (31a) qui, dans la position de fonctionnement du support (3), est traversé par des axes de fixation (23).

4. Collecteur photovoltaïque selon l'une des revendications 1 à 3, **caractérisé en ce que** la deuxième branche (32) est pourvue d'au moins un creux (32a) qui sert au passage d'au moins un conducteur.

5. Collecteur photovoltaïque selon l'une des revendications 1 à 4, **caractérisé en ce qu'**il est prévu sur la face arrière de la deuxième branche (32) un boîtier (51) pour des armatures électriques.

6. Collecteur photovoltaïque selon l'une des revendications 1 à 5, **caractérisé en ce que** la quatrième branche (33) est pourvue d'au moins un creux (33a) qui sert à l'écoulement de l'eau.

7. Collecteur photovoltaïque selon l'une des revendications 1 à 6, **caractérisé en ce que** dans la position de fonctionnement du support (3), il est prévu entre la première branche (31), la troisième branche (34) et la cinquième branche (35), et les surfaces du mur des couches intermédiaires (30) respectives en mousse ou en matière similaire.

8. Collecteur photovoltaïque selon l'une des revendications 1 à 7, **caractérisé en ce qu'**il est prévu, associés aux supports (3) disposés côte à côte sur un mur (1, 2), des éléments intermédiaires (3a) qui relient ces supports (3), qui sont approximativement triangulaires, en section transversale, et qui sont aptes à être glissés dans le conduit formé par les deuxième, troisième et quatrième branches (32, 34, 33) du support (3).

9. Collecteur photovoltaïque selon l'une des revendications 1 à 8, **caractérisé en ce qu'**on lui associe un élément de fixation (6) qui sert à fixer le support (3) sur un axe porteur (22b) qui se trouve sur le mur, cet élément de fixation (6) se composant d'un corps de blocage en plusieurs parties (61, 62) et d'un axe (23) pourvu d'une tête et d'une tige filetée, et l'axe (23) étant apte à être fixé à l'axe porteur (22b) à l'aide du corps de blocage (6).

10. Collecteur photovoltaïque selon la revendication 9, **caractérisé en ce qu'**il est prévu, associée au corps de blocage (6), une bague de serrage (63) grâce à laquelle le corps de blocage (6) est maintenu en position fermée.
